# EUROPÄISCHE PATENTSCHRIFT

(11) **EP 2 951 053 B1**
(45) Veröffentlichungstag und Bekanntmachung des Hinweises auf die Patenterteilung: **20.04.2016**
(21) Anmeldenummer: 14702001.0
(22) Anmeldetag: 29.01.2014
(51) Int. Cl.: B60N 2/06, B60N 2/02

(54) **SPINDELGETRIEBE FÜR EINE VERSTELLVORRICHTUNG IN EINEM KRAFTFAHRZEUG SOWIE FAHRZEUGSITZ**
SPINDLE GEAR BOX FOR AN ADJUSTING DEVICE IN A VEHICLE AND A VEHICLE SEAT
TRANSMISSION A BROCHE ET UN DISPOSITIF DE RÉGLAGE D'UN VÉHICULE ET SIÈGE DE VÉHICULE

(30) Priorität: 30.01.2013 DE 102013001804; 26.04.2013 DE 102013207665
(43) Veröffentlichungstag der Anmeldung: 09.12.2015
(73) Patentinhaber: Johnson Controls Metals and Mechanisms GmbH & Co. KG, 42699 Solingen (DE)
(72) Erfinder: HOFFMANN, Andreas, 42489 Wuelfrath (DE); BALZAR, David, 42799 Leichlingen (DE)
(74) Vertreter: Liedhegener, Ralf
(86) Internationale Anmeldenummer: PCT/EP2014/051707
(87) Internationale Veröffentlichungsnummer: WO 2014/118222

(56) Entgegenhaltungen:
- DE-A1-102005 001 333
- DE-A1-102007 027 410
- DE-B4- 10 362 040
- US-A1- 2011 079 699

## Beschreibung

Die Erfindung betrifft ein Spindelgetriebe für eine Verstellvorrichtung in einem Kraftfahrzeug, insbesondere in einem Kraftfahrzeugsitz, mit einem Gehäuse, einer Spindelmutter zum Zusammenwirken mit einer Spindel, wobei die Spindelmutter eine Außenverzahnung umfasst und die Spindelmutter mindestens eine Lagerfläche zur drehbaren Lagerung der Spindelmutter in dem Gehäuse umfasst, einer Anlaufscheibe, die auf die Lagerfläche aufgesteckt ist und sie umgreift und einer Schnecke, die im Gehäuse drehbar gelagert ist und eine Schneckenverzahnung aufweist, die mit der Außenverzahnung der Spindelmutter im Eingriff ist.

Die Erfindung betrifft des Weiteren einen Fahrzeugsitz.

### Stand der Technik

Aus der DE 103 62 040 B4 ist ein gattungsgemäßes Spindelgetriebe bekannt. Eine Axialkräfte aufnehmende Anlaufscheibe, die einerseits in axialer Richtung an einer Spindelmutter anliegt und drehfest mit dieser verbunden ist, und die andererseits in axialer Richtung an einer Lagerbuchse eines Getriebegehäuses abgestützt ist, weist einen Vorsprung auf, der in einen entsprechenden Rücksprung der Spindelmutter eingreift und dadurch eine Drehsicherung bildet. Die Drehsicherung vermeidet eine Geräuschbildung durch Relativbewegungen zwischen der Anlaufscheibe und der Spindelmutter. Das Einfädeln des Vorsprungs der Anlaufscheibe in den Rücksprung der Spindelmutter erfordert eine entsprechende Ausrichtung der Anlaufscheibe zur Spindelmutter und bedeutet somit einen zusätzlichen Arbeitsschritt während der Montage des Spindelgetriebes. Es können zudem Qualitätsprobleme durch Beschädigungen und während der Getriebemontage eine Spanbildung an der Spindelmutter durch den Vorsprung der Anlaufscheibe auftreten.

Die DE 10 2005 001 333 A1 offenbart ein Spindelgetriebe mit Anlaufscheiben, die auf Vorsprüngen sitzen, jedoch nicht auf diese aufgepresst sind.

Aus der DE 10 2007 027 410 A1 ist ein Spindelgetriebe mit einer Spindelmutter bekannt, die zwei Lagerflächen und eine zwischen den Lagerflächen angeordnete Außenverzahnung aufweist. Eine Lagerfläche der Spindelmutter ist aufwendig mittels fünf Scheiben gelagert. Für die Lagerung der zweiten Lagerfläche ist eine Anlaufscheibe vorgesehen. Die Scheiben und die Anlaufscheibe sitzen mit Spiel auf den zugehörigen Lagerflächen und sind nicht auf diese aufgepresst.

### Aufgabe

Der Erfindung liegt die Aufgabe zu Grunde, ein Spindelgetriebe für eine Verstellvorrichtung der eingangs genannten Art zu verbessern, insbesondere einen einfach zu montierenden Getriebeaufbau zur Verfügung zu stellen, bei dem mindestens eine Anlaufscheibe drehfest mit einer Spindelmutter verbunden ist, insbesondere ohne dass die Anlaufscheibe einen Vorsprung aufweisen muss.

### Lösung

Diese Aufgabe wird erfindungsgemäß durch ein Spindelgetriebe mit den Merkmalen des Anspruches 1 sowie einen Fahrzeugsitz mit den Merkmalen des Anspruches 15 gelöst.

Vorteilhafte Ausgestaltungen, welche einzeln oder in Kombination miteinander eingesetzt werden können, sind Gegenstand der Unteransprüche.

Dadurch, dass die Anlaufscheibe auf die Spindelmutter aufgepresst ist, insbesondere auf einen Absatz der Lagerfläche der Spindelmutter, kann die Anlaufscheibe während der Montage ohne Lageorientierung und Ausrichtung zugeführt werden. Die Anlaufscheibe kann zudem ein einfaches, ebenes Bauteil sein und weniger komplex als herkömmliche Anlaufscheiben mit Vorsprung. Durch das Aufpressen von außen wird zudem eine glatte Oberfläche an der Lauffläche der Anlaufscheibe zu den Lagerbuchsen sichergestellt.

Unter dem Begriff Aufpressen ist eine Übermaßpassung (Presspassung) zu verstehen, bei der vor dem Fügen das Größtmaß der Bohrung der Anlaufscheibe in jedem Fall kleiner ist als das Kleinstmaß der Geometrie der Spindelmutter, auf die die Anlaufscheibe aufgebracht wird. Auch ein an sich bekanntes Aufschrumpfen, dem das Prinzip der Wärmedehnung zugrunde liegt, soll nachfolgend unter dem Begriff Aufpressen verstanden werden.

Besonders niedrige Herstellkosten erreicht man, wenn die mindestens eine Lagerfläche eine kreiszylindrische Außenkontur umfasst, deren Mittelachse mit einer Drehachse der Spindelmutter fluchtet. Alternativ können jedoch auch Lagerflächen vorgesehen sein, die von der kreisrunden Form abweichen, wie dies beispielsweise in der DE 103 27 654 A1 offenbart ist.

Die Lagerfläche kann neben der zur Lagerung der Spindelmutter dienenden Außenkontur noch zusätzliche Abschnitte umfassen, die vorzugsweise in axialer Richtung neben der Außenkontur angeordnet sind, beispielsweise Nuten oder Absätze, das heißt Durchmesserabstufungen.

Wenn die Spindelmutter genau zwei Lagerflächen umfasst, zwischen denen die Außenverzahnung angeordnet ist, lassen sich zwei Anlaufscheiben gleichzeitig in entgegengesetzter Richtung aufpressen. Die resultierenden Kräfte auf die Spindelmutter heben sich dabei gegenseitig auf

Ein besonders einfaches Aufschieben der Anlaufscheibe auf die Spindelmutter lässt sich erreichen, indem die Anlaufscheibe eine als zentrisches Loch ausgebildete Öffnung mit einem Durchmesser aufweist, der geringfügig größer ist als der Außendurchmesser der Außenkontur zur drehbaren Lagerung der Spindelmutter. Der Durchmesser der Öffnung ist vorzugsweise geringfügig kleiner als der Außendurchmesser eines Absatzes der Lagerfläche, auf den die Anlaufscheibe aufgepresst wird. Vorzugsweise beträgt der Durchmesserunterschied 0,05 mm bis 0,2 mm.

Ein besonders leichtes Aufschieben der Anlaufscheibe auf die Außenkontur der Lagerfläche wird erreicht, indem der Absatz in einem Übergangsbereich zwischen der Lagerfläche und der Außenverzahnung ausgebildet ist. Die Anlaufscheibe lässt sich dadurch zunächst leicht auf die Lagerscheibe aufschieben, bis die Anlaufscheibe letztlich den Absatz erreicht und auf diesen aufgeschoben wird. Eine Fase an dem von der Außenverzahnung abgewandten Ende der Lagerfläche erleichtert das Aufschieben der Anlaufscheibe auf die Lagerfläche, indem die Anlaufscheibe durch die Fase zentriert und aufgefädelt wird.

Der Absatz ragt vorzugsweise zumindest abschnittsweise über die Außenkontur der Lagerfläche hinaus. Der Absatz muss jedoch keinen kreisrunden Querschnitt haben, sondern kann beispielsweise auch polygon oder verzahnt ausgebildet sein.

Durch das Aufpressen der Anlaufscheibe auf den Absatz der Spindelmutter entsteht eine kraftschlüssige Verbindung zwischen der Anlaufscheibe und der Spindelmutter. Eine alternative oder zusätzliche formschlüssige Verbindung kann erreicht werden, indem die Erstreckung der Außenverzahnung in mindestens einer axialen Richtung in einem radial inneren Bereich der Außenverzahnung durch eine in radialer Richtung ausgerichtete Stirnfläche begrenzt ist und mindestens eine Haltespitze der Außenverzahnung in einem radial äußeren Bereich der Außenverzahnung in axialer Richtung über die Stirnfläche hinaus in Richtung der Anlaufscheibe übersteht und die mindestens eine Haltespitze formschlüssig in eine Vertiefung der Anlaufscheibe eingreift.

Vorzugsweise sind mehrere Haltespitzen vorgesehen, die gleichmäßig über den Umfang der Spindelmutter verteilt sind, insbesondere bildet jeder Zahn der Außenverzahnung in jede der beiden axialen Richtungen eine Haltespitze. Die beiden Anlaufscheiben weisen entsprechend korrelierende Vertiefungen auf, die insbesondere durch das Aufpressen der Anlaufscheibe auf die Spindelmutter gebildet sind. Die Ausbildung der Vertiefungen lässt sich besonders wirkungsvoll erreichen, indem die Festigkeit des Werkstoffes der Spindelmutter größer ist als die Festigkeit des Werkstoffes der Anlaufscheibe.

Eine Freimachung in Form einer Nut im Übergangsbereich zwischen der Lagerfläche und der Außenverzahnung der Spindelmutter kann Späne aufnehmen, die sich während des Aufpressens der Anlaufscheibe bilden können. Die Nut ist vorzugsweise jeweils angrenzend an eine der beiden Stirnflächen der Spindelmutter ausgebildet, insbesondere zwischen einem der Absätze und der zugehörigen Stirnfläche.

Ein Fahrzeugsitz, der mit einem erfindungsgemäßen Spindelgetriebe ausgestattet ist, insbesondere zum Antrieb einer Sitzschiene eines Sitzlängsverstellers und/oder zum Antrieb eines Höheneinstellers, weist Kostenvorteile und dadurch größere Vermarktungschancen gegenüber einem herkömmlichen Fahrzeugsitz auf.

Besonders kostengünstig lassen sich die Anlaufscheiben als ebene Stanzteile ausführen. Die Anlaufscheiben sind dabei vorzugsweise von konstanter Materialdicke und rotationssymmetrisch gestaltet, mit einem kreisrunden Außendurchmesser und einem zentrisch dazu gelegenen Loch. Der Innendurchmesser dieses Loches ist als leichter Presssitz zum Absatz der Lagerfläche ausgelegt.

### Figuren und Ausführungsform der Erfindung

Im Folgenden ist die Erfindung anhand einer Figur zum Stand der Technik und zweier in den übrigen Figuren dargestellter vorteilhafter Ausführungsbeispiele näher erläutert. Die Erfindung ist jedoch nicht auf diese Ausführungsbeispiele beschränkt. Es zeigen:
- Fig. 1:: eine Explosionsdarstellung eines aus dem Stand der Technik bekannten Spindelgetriebes,
- Fig. 2:: eine perspektivische Ansicht einer Spindelmutter eines ersten Ausführungsbeispiels eines erfindungsgemäßen Spindelantriebs,
- Fig. 3:: eine Fig. 2 entsprechende Ansicht der Spindelmutter mit einer teilweise aufgeschobenen Anlaufscheibe während der Montage,
- Fig. 4:: eine Fig. 3 entsprechende Ansicht mit vollständig aufgepresster Anlaufscheibe,
- Fig. 5:: eine Seitenansicht auf einen Teil der Spindelmutter des ersten Ausführungsbeispiels,
- Fig. 6:: einen Schnitt durch die Einzelheit VI aus Fig. 5,
- Fig. 7:: eine perspektivische Ansicht einer Spindelmutter eines zweiten Ausführungsbeispiels,
- Fig. 8:: eine Seitenansicht auf einen Teil der Spindelmutter des zweiten Ausführungsbeispiels und
- Fig. 9:: einen Schnitt durch die Einzelheit IX aus Fig. 8.

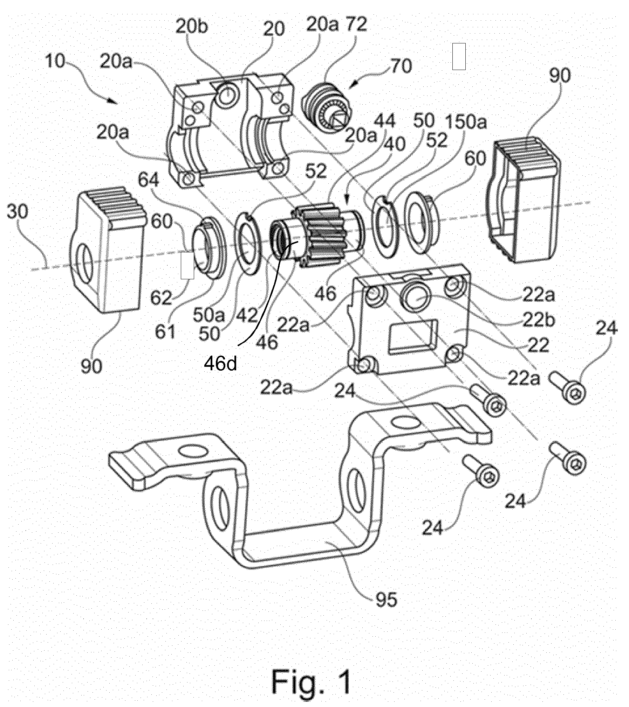

- Figur 1: zeigt ein aus dem Stand der Technik bekanntes Spindelgetriebe 10.

Das Spindelgetriebe 10 umfasst ein Gehäuse, das aus einem ersten Gehäuseteil 20 und einem zweiten Gehäuseteil 22 zusammengesetzt ist. Die beiden Gehäuseteile 20, 22 sind vorliegend durch vier mit jeweils einem selbstschneidenden Außengewinde versehene Schrauben 24 miteinander verbunden. Jede der vier Schrauben 24 durchragt jeweils ein Durchgangsloch 22a in dem zweiten Gehäuseteil 22 und ist mit ihrem selbstschneidenden Außengewinde in jeweils ein kreiszylinderförmiges Loch 20a des ersten Gehäuseteils 20 eingeschraubt.

Das Gehäuse 20, 22 bildet einen Innenraum und Lagerbereiche für einerseits eine Spindelmutter 40 und andererseits eine Schnecke 70, die zusammen eine Schneckengetriebestufe bilden. Die Drehachse der Spindelmutter 40 definiert eine Axialrichtung, die bei Spindelgetrieben für Fahrzeugsitzlängseinsteller häufig in etwa in Fahrtrichtung orientiert ist. Das Gehäuse 20, 22 ist in Axialrichtung durchgehend offen für die Aufnahme einer Spindel 30, die in Figur 1 durch eine gestrichelte Linie nur schematisiert dargestellt ist. Die Spindel 30 weist entlang ihrer axialen Erstreckung ein Außengewinde zum Zusammenwirken mit der Spindelmutter 40 auf. Die Spindelmutter 40 hat dazu ein Innengewinde 42, das in Eingriff mit dem Außengewinde der Spindel 30 ist. Eine Außenverzahnung 44 der Spindelmutter wirkt mit einer Schneckenverzahnung 72 der Schnecke 70 zusammen.

Die Spindelmutter 40 weist in Axialrichtung gesehen beidseits der Außenverzahnung 44 jeweils eine Lagerfläche 46 auf, die im Wesentlichen eine zylindrische Außenkontur 46d umfasst, die einen Außendurchmesser hat, der kleiner ist als der Außendurchmesser der Außenverzahnung 44 in den tiefsten Stellen der Zähne, also kleiner als der Innenkreis dieser Außenverzahnung 44. Auf jede der beiden äußeren Lagerflächen 46 ist eine flache Anlaufscheibe 50 mit einer kreisrunden Öffnung 50a aufgesteckt, die zwei um eine Materialstärke der Anlaufscheibe voneinander beabstandete, jeweils nach außen weisende, senkrecht zur Axialrichtung orientierte Hauptflächen umfasst. Die beiden Hauptflächen sind vorzugsweise vollständig mit einem Gleitlack beschichtet, insbesondere mit PTFE.

Die Anlaufscheibe 50 hat einen Vorsprung 52, axial vorspringt, aber auch radial ausgebildet sein könnte. Der axiale Vorsprung 52 greift im montierten Zustand zwischen zwei Zähne der Außenverzahnung 44, wodurch eine Drehsicherung der Anlaufscheibe relativ zur Außenverzahnung 44 erzielt wird. Diese Drehsicherung kann ein geringes Spiel aufweisen, das eingestellt werden kann, z. B. durch Anpassen der Abmessungen des Vorsprungs 52. Grundsätzlich ist die Anlaufscheibe 50 aber aufgrund des Vorsprungs 52 an die Drehbewegung der Spindelmutter 40 gekoppelt.

Auf den beiden äußeren Lagerflächen 46 sitzt jeweils neben der von der Außenverzahnung 44 abgewandten Hauptfläche jeder Anlaufscheibe 50 eine Lagerbuchse 60, die einen Ring 61, der von seiner Grundgeometrie im Wesentlichen der Anlaufscheibe 50 entspricht und einen im Außendurchmesser kleineren, von der Außenverzahnung 44 weggewandten kreiszylindrischen Bund 62 aufweist. Der Innendurchmesser des Bundes 62 entspricht annähernd dem Außendurchmesser der zugehörigen Lagerfläche 46. Am Bund 62 der Lagerbuchse 60 springt in radialer Richtung eine Nase 64 vor. Die Lagerbuchse 60 ist vorzugsweise aus einem metallischen Lagerwerkstoff.

In dem ersten Gehäuseteil 20 und dem zweiten Gehäuseteil 22 sind jeweils halbkreisförmig Lagerrillen für die Aufnahme der Lagerbuchsen 60 vorgesehen. Das Gehäuse 20, 22 weist auch eine Ausnehmung auf, die die Nase 64 aufnimmt, so dass sich die Lagerbuchse 60 nicht gegenüber dem Gehäuse 20, 22 drehen kann.

Während des Betriebs des Spindelgetriebes 10 findet eine Relativdrehung zwischen der drehfest mit dem Gehäuse 20, 22 verbundenen Lagerbuchse 60 und der Anlaufscheibe 50, die drehfest mit der relativ zum Gehäuse 20, 22 drehenden Spindelmutter 40 verbunden ist, statt. Aufgrund von Axialkräften treten dabei Reibkräfte zwischen der Lagerbuchse 60 und der Anlaufscheibe 50 auf, die durch eine geeignete Materialpaarung möglichst gering gehalten werden können.

Weiterhin ist in dem Gehäuse 20, 22 die Schnecke 70 drehbar gelagert. Die Achse der Schnecke 70 verläuft im Wesentlichen rechtwinklig und versetzt zur Achse der Spindelmutter 40 und der Spindel 30. Die Schnecke 70 hat eine Schneckenverzahnung 72 auf ihrem Außenmantel und im Inneren eine Mehrkantaufnahme für die Aufnahme einer antreibenden, insbesondere elastischen Welle. Die Schnecke 70 ist vorzugsweise durch ein Kugellager an jedem ihrer axialen Enden in jeweils genau einer Lageröffnung 20b, 22b im Gehäuse 20, 22 drehbar gelagert. Eine erste Lageröffnung 20b ist dabei in dem ersten Gehäuseteil 20 eingearbeitet, eine zweite Lageröffnung 22b in dem zweiten Gehäuseteil 22. Zusätzlich können in Figur 1 nicht dargestellte Lagerbuchsen - ähnlich den Lagerbuchsen 60 - zur Lagerung des Schneckenrades im Gehäuse 20, 22 vorgesehen sein.

In an sich bekannter Weise wird das Getriebe von zwei Schalen 90 aus Gummi oder einem entsprechenden, zur Geräuschdämmung geeigneten Werkstoff übergriffen und ist in einen im Wesentlichen U-förmigen Lagerwinkel 95 untergebracht, der beispielsweise an oder in einem Schienenprofil eines Fahrzeugsitzlängseinstellers befestigt ist.

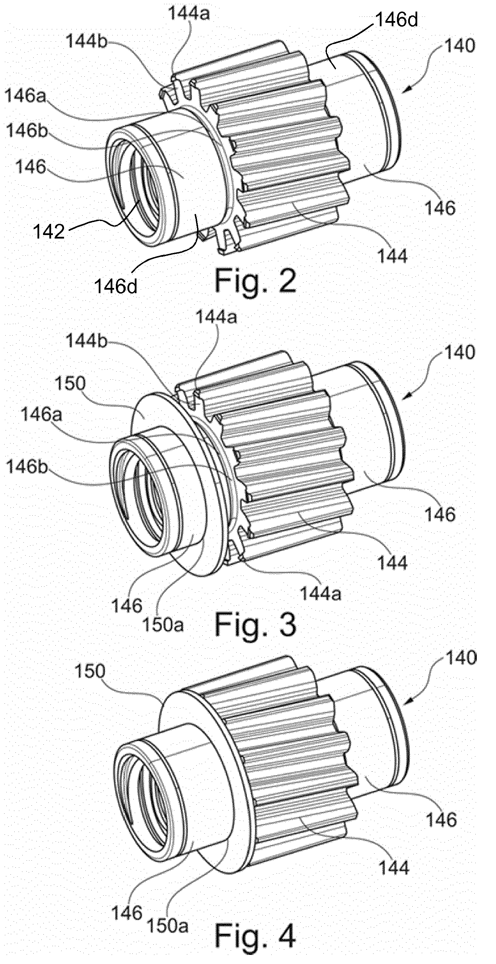

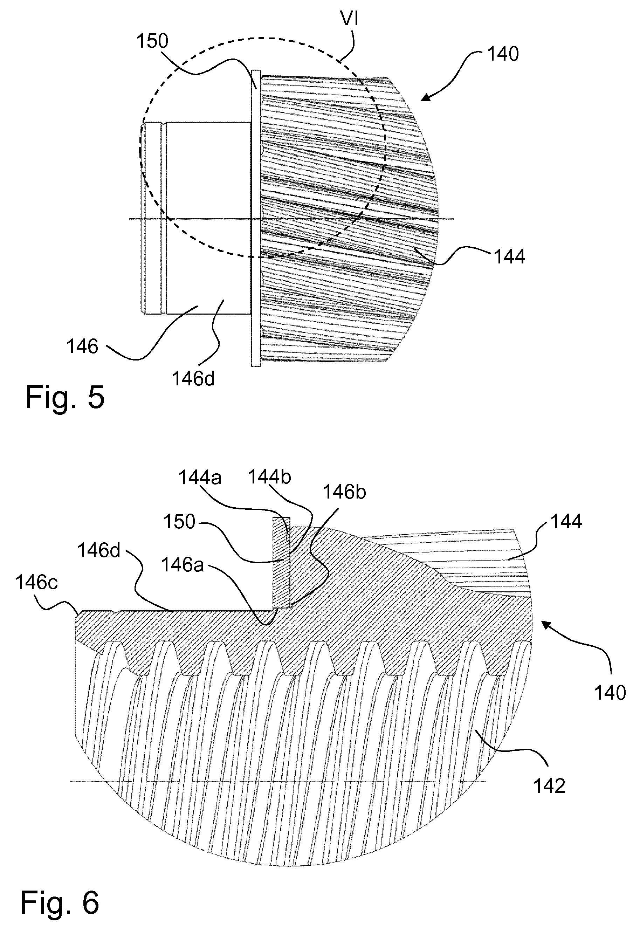

In den Figuren 2 bis 6 ist eine Spindelmutter 140 eines ersten Ausführungsbeispiels eines erfindungsgemäßen Spindelgetriebes dargestellt, dessen Aufbau - sofern nachfolgend nicht abweichend beschrieben - dem Spindelgetriebe 10 des zuvor beschriebenen Standes der Technik entspricht. Die vom Stand der Technik abweichenden Bauteile haben um 100 höhere Bezugszeichen.

Die Spindelmutter 140, die im Grundaufbau und der Funktionsweise weitgehend einer Spindelmutter 40 des Standes der Technik entspricht, weist eine Außenverzahnung 144 zum Zusammenwirken mit der Schneckenverzahnung 72 der Schnecke 70 auf. In Axialrichtung ist die räumliche Erstreckung der Außenverzahnung 144 in beiden Richtungen in einem radial inneren Bereich, dessen Durchmesser etwas geringer ist als der Kopfkreisdurchmesser der Außenverzahnung 144, durch jeweils eine weitgehend plane Stirnfläche 144b begrenzt. Im radial äußeren Bereich der Außenverzahnung 144 steht diese in Axialrichtung seitlich jeweils geringfügig über die zugehörige Stirnfläche 144b über. Dadurch weist jeder Zahn der Außenverzahnung 144 beidseitig je eine über die zugehörige Stirnfläche 144b überstehende Haltespitze 144a auf, die vorzugsweise eine axiale Erstreckung von einigen Zehntel Millimetern hat.

In Axialrichtung gesehen beidseits der Außenverzahnung 144 weist die Spindelmutter 140 jeweils eine Lagerfläche 146 auf, die eine Außenkontur 146d zur drehbaren Lagerung der Spindelmutter 140 umfasst, deren Grundgeometrie kreiszylindrisch ist und die einen Außendurchmesser hat, der kleiner ist als der Außendurchmesser der Außenverzahnung 144 in den tiefsten Stellen der Zähne, also kleiner als der Innenkreis dieser Außenverzahnung 144.

In den Übergangsbereichen zu den Stirnflächen 144b, das heißt zwischen der Außenkontur 146d und der Stirnfläche 144b, weisen die Lagerflächen 146 jeweils einen umlaufenden Absatz 146a auf. Im Bereich des Absatzes 146a ist der Durchmesser der Lagerflächen 146 geringfügig größer als im Bereich der Außenkonturen 146d.

Der Durchmesser des Absatzes 146a ist vorzugsweise 0,05 mm bis 0,2 mm größer als der Durchmesser der Außenkontur 146d.

Eine umlaufende Nut 146b zwischen der Stirnfläche 144b und dem Absatz 146a dient zur Aufnahme von Spänen, die bei einem nachfolgend beschriebenen Aufpressvorgang der Anlaufscheibe 150 auf den Absatz 146a entstehen.

Auf jede der beiden äußeren Lagerflächen 146 ist eine flache, kreisrunde Anlaufscheibe 150 mit einer kreisrunden Öffnung 150a aufgesteckt, die zwei um die Materialstärke der Anlaufscheibe 150 voneinander beabstandete, jeweils nach außen weisende, senkrecht zur Axialrichtung orientierte Hauptflächen umfasst. Der Mittelpunkt der kreisrunden Öffnung 150a ist identisch mit dem Mittelpunkt der kreisrunden Anlaufscheibe 150. Der Durchmesser der Öffnung 150a entspricht dem Durchmesser der Außenkontur 146d der Lagerfläche 146 oder ist geringfügig größer. Der Durchmesser der Öffnung 150a ist jedoch, zumindest vor der Montage, kleiner als der Durchmesser des Absatzes 146a, vorzugsweise um 0,05 mm bis 0,02 mm. Dadurch lässt sich die Anlaufscheibe 150 während der Montage des Spindelgetriebes 10 über die Außenkontur 146d der Lagerfläche 146 schieben, ohne diese zu beschädigen. Auf die Außenkontur 146d lässt sich die Anlaufscheibe 150 während des weiteren Montageverlaufs jedoch nur aufpressen.

Die Anlaufscheibe 150 unterscheidet sich somit von einer zuvor beschriebenen Anlaufscheibe 50 des Standes der Technik in der Ausführung der Drehsicherung zur Spindelmutter 140. Die Anlaufscheibe 150 ist an die Drehbewegung der Spindelmutter 140 gekoppelt, indem die Öffnung 150a der Anlaufscheibe 150 aufgrund der beschriebenen Durchmesserdifferenz mit einem Presssitz auf dem Absatz 146a sitzt.

Ein der Außenverzahnung 144 abgewandtes Ende einer jeden Lagerfläche 146 weist eine Fase 146c auf, die derart ausgebildet ist, das während der Montage des Spindelgetriebes ein Aufschieben der Anlaufscheibe 150 auf die Lagerfläche 146 erleichtert ist.

Die Anlaufscheibe 150 ist als ebenes Stanzteil ausgeführt. Die Festigkeit und/oder Härte der Anlaufscheibe ist gegenüber der Festigkeit und/oder Härte des Absatzes 146a und der Außenverzahnung 144 reduziert. Nach Zuführung der beiden Anlaufscheiben 150 auf die beiden Lagerflächen 146 werden die beiden Anlaufscheiben 150 axial aufeinander zu in Richtung der jeweils zugeordneten Stirnfläche 144b geschoben und anschließend auf die Absätze 146a aufgepresst. Das weichere Material der Anlaufscheiben 150 schiebt sich dabei jeweils auf den härteren Absatz 146a. Die Haltespitzen 144a der Außenverzahnung dringen vorliegend in die Anlaufscheibe 150 ein, vorzugsweise soweit, bis eine Hauptfläche der Anlaufscheibe 150 flächig an der Stirnfäche 144b der Außenverzahnung 144 anliegt. Durch das Eindringen der Haltespitzen 144a in die Anlaufscheibe 150 wird eine formschlüssige Mitnahme durch die Spindelmutter 140 gewährleistet.

Bei dem Aufpressen der Anlaufscheibe 150 auf den Absatz 146a kann es zu einer Spanbildung kommen. Die enstehenden Späne werden in der Nut 146b aufgenommen.

Das Zuführen der Anlaufscheibe 150 während der Montage kann automatisch vereinzelt erfolgen, ohne dass eine Lageorientierung erforderlich ist.

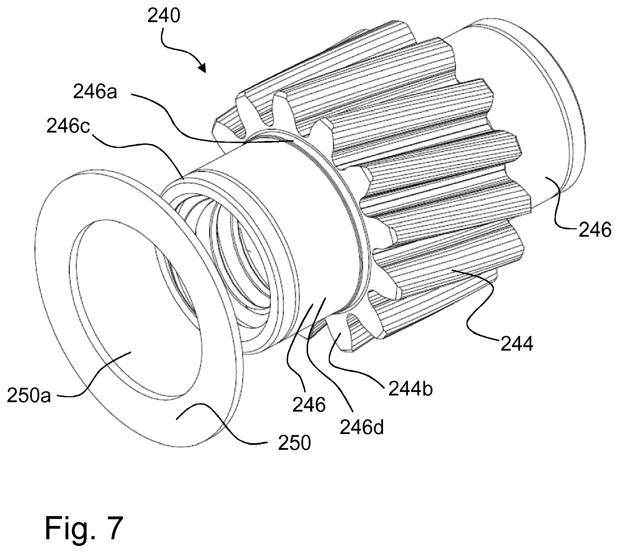

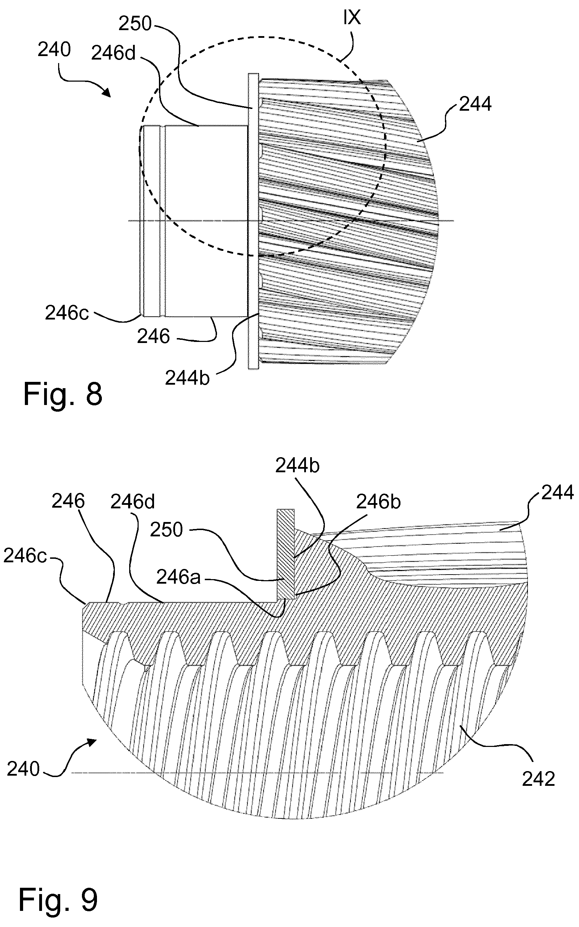

In den Figuren 7 bis 9 ist eine Spindelmutter 240 eines zweiten Ausführungsbeispiels eines erfindungsgemäßen Spindelgetriebes dargestellt, dessen Aufbau - sofern nachfolgend nicht abweichend beschrieben - dem Spindelgetriebe 10 des zuvor beschriebenen Standes der Technik entspricht. Die vom Stand der Technik abweichenden Bauteile haben um 200 höhere Bezugszeichen.

Eine drehfeste Verbindung zwischen der Spindelmutter 240 und einer Anlaufscheibe 250 erfolgt ausschließlich kraftschlüssig über einen Presssitz zwischen einem Absatz 246a und der Anlaufscheibe 250. Die Anlaufscheibe 250 liegt flächig an einer Stirnfläche 244b der Spindelmutter 240 an, vorliegend an einer Stirnfläche 244b einer Außenverzahnung 244. Im Gegensatz zum ersten Ausführungsbeispiel sind keine den Haltespitzen 144a gleichwirkenden Geometrien an der Spindelmutter 240 vorgesehen.

Die übrigen Merkmale und Montageschritte des zweiten Ausführungsbeispiels entsprechen dem ersten Ausführungsbeispiel. Die Bauteile des zweiten Ausführungsbeispiels tragen daher gegenüber dem ersten Ausführungsbeispiel um 100 höhere Bezugszeichen. Die Unterschiede zwischen dem ersten Ausführungsbeispiel und dem zweiten Ausführungsbeispiel beschränken sich somit auf das Vorliegen oder Nichtvorliegen von Haltespitzen.

Insbesondere ein Innengewinde 242, zwei Lagerflächen 246, eine Nut 246b, eine Fase 246c, eine Außenkontur 246d und jeweils eine Öffnung 250a in den beiden Anlaufscheiben 250 entsprechen den beschriebenen Bauteilen des ersten Ausführungsbeispiels.

In einer Abwandlung des zweiten Ausführungsbeispiels sind Haltespitzen vorgesehen, dringen jedoch nicht in die Anlaufscheiben 250 ein. Die drehfeste Verbindung zwischen der Spindelmutter 240 und der Anlaufscheibe 250 erfolgt ausschließlich kraftschlüssig über den Presssitz zwischen dem Absatz 246a und der Anlaufscheibe 250.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 10: Spindelgetriebe
- 20: erstes Gehäuseteil
- 20a: kreiszylinderförmiges Loch
- 20b: erste Lageröffnung
- 22: zweites Gehäuseteil
- 22a: Durchgangsloch
- 22b: zweite Lageröffnung
- 24: Schraube
- 30: Spindel
- 40, 140, 240: Spindelmutter
- 42, 142, 242: Innengewinde
- 44, 144, 244: Außenverzahnung
- 46, 146, 246: Lagerfläche
- 46d, 146d, 246d: Außenkontur
- 50, 150, 250: Anlaufscheibe
- 50a, 150a, 250a: Öffnung
- 52: Vorsprung
- 60: Lagerbuchse
- 61: Ring
- 62: Bund
- 64: Nase
- 70: Schnecke
- 72: Schneckenverzahnung
- 90: Schale
- 95: Lagerwinkel
- 144a: Haltespitze
- 144b, 244b: Stirnfläche
- 146a, 246a: Absatz
- 146b, 246b: Nut
- 146c, 246c: Fase

## Patentansprüche

1. Spindelgetriebe (10) für eine Verstellvorrichtung in einem Kraftfahrzeug, insbesondere in einem Kraftfahrzeugsitz, mit
a) einem Gehäuse (20, 22),
b) einer Spindelmutter (40, 140, 240) zum Zusammenwirken mit einer Spindel (30), wobei die Spindelmutter (40, 140, 240) eine Außenverzahnung (44, 144, 244) umfasst, und die Spindelmutter (40, 140, 240) mindestens eine Lagerfläche (46, 146, 246) zur drehbaren Lagerung der Spindelmutter (40, 140, 240) in dem Gehäuse (20, 22) umfasst,
c) einer Anlaufscheibe (50, 150, 250), die auf die Lagerfläche (46, 146, 246) aufgesteckt ist und sie umgreift und
d) einer Schnecke (70), die im Gehäuse (20, 22) drehbar gelagert ist und eine Schneckenverzahnung (72) aufweist, die mit der Außenverzahnung (44, 144, 244) der Spindelmutter (40, 140, 240) im Eingriff ist,
**dadurch gekennzeichnet, dass**
die Anlaufscheibe (50, 150, 250) auf die Spindelmutter (40, 140, 240) aufgepresst ist.

2. Spindelgetriebe (10) nach Anspruch 1, **dadurch gekennzeichnet, dass** die mindestens eine Lagerfläche (46, 146, 246) eine, insbesondere kreiszylindrische, Außenkontur (46d, 146d, 246d) zur drehbaren Lagerung der Spindelmutter (40, 140, 240) in dem Gehäuse (20, 22) umfasst, deren Mittelachse mit einer Drehachse der Spindelmutter (40, 140, 240) fluchtet.

3. Spindelgetriebe (10) nach Anspruch 1 oder 2, **dadurch gekennzeichnet, dass** die mindestens eine Lagerfläche (46, 146, 246) einen Absatz (146a, 246a) zur drehfesten Lagerung der Anlaufscheibe (50, 150, 250) umfasst, auf den die Anlaufscheibe (50, 150, 250) aufgepresst ist.

4. Spindelgetriebe (10) nach Anspruch 3, **dadurch gekennzeichnet, dass** der Absatz (146a, 246a) in radialer Richtung zumindest abschnittweise über die Außenkontur (46d, 146d, 246d) zur drehbaren Lagerung der Spindelmutter (40, 140, 240) hinausragt.

5. Spindelgetriebe (10) nach Anspruch 4, **dadurch gekennzeichnet, dass** der Absatz (146a, 246a) einen kreisrunden Querschnitt aufweist und der Durchmesser des Absatzes 0,05 mm bis 0,2 mm größer ist als der Durchmesser der Außenkontur (46d, 146d, 246d) zur drehbaren Lagerung der Spindelmutter (40, 140, 240).

6. Spindelgetriebe (10) nach einem der Ansprüche 1 bis 5, **dadurch gekennzeichnet, dass** die Spindelmutter (40, 140, 240) genau zwei Lagerflächen (46, 146, 246) umfasst, zwischen denen die Außenverzahnung (44, 144, 244) angeordnet ist.

7. Spindelgetriebe (10) nach einem der Ansprüche 3 bis 6, **dadurch gekennzeichnet, dass** mindestens eine Lagerfläche (146, 246) einen Absatz (146a, 246a) in einem Übergangsbereich zwischen der Lagerfläche (46, 146, 246) und der Außenverzahnung (144, 244) umfasst.

8. Spindelgetriebe (10) nach einem der Ansprüche 1 bis 7, **dadurch gekennzeichnet, dass** die axiale Erstreckung der Außenverzahnung (144, 244) in mindestens einer axialen Richtung durch eine in radialer Richtung ausgerichtete Stirnfläche (144b, 244b) begrenzt ist.

9. Spindelgetriebe (10) nach Anspruch 8, **dadurch gekennzeichnet, dass** die Anlaufscheibe (50, 150, 250) an der Stirnfläche (144b, 244b) anliegt.

10. Spindelgetriebe (10) nach Anspruch 8 oder 9, **dadurch gekennzeichnet, dass** mindestens eine Haltespitze (144a) in axialer Richtung über die Stirnfläche (144b) hinaus in Richtung der Anlaufscheibe (150) übersteht.

11. Spindelgetriebe (10) nach Anspruch 10, **dadurch gekennzeichnet, dass** die mindestens eine Haltespitze (144a) in einem radial äußeren Bereich der Außenverzahnung (144) angeordnet ist.

12. Spindelgetriebe (10) nach Anspruch 10 oder 11, **dadurch gekennzeichnet, dass** die mindestens eine Haltespitze (144a) formschlüssig in eine Vertiefung der Anlaufscheibe (150) eingreift und die Vertiefung der Anlaufscheibe (150) insbesondere durch das Aufpressen der Anlaufscheibe (150) auf die Spindelmutter (140) gebildet ist.

13. Spindelgetriebe (10) nach einem der Ansprüche 1 bis 12, **dadurch gekennzeichnet, dass** die Festigkeit des Werkstoffes der Spindelmutter (140. 240) größer ist als die Festigkeit des Werkstoffes der Anlaufscheibe (150, 250).

14. Spindelgetriebe (10) nach einem der Ansprüche 8 bis 13, **dadurch gekennzeichnet, dass** die Spindelmutter (140, 240) angrenzend an die Stirnfläche (144b, 244b), insbesondere zwischen dem Absatz (146a, 246a) und der Stirnfläche (144b, 244b), eine umlaufende Nut (146b, 246b) zur Aufnahme von Spänen, die beim Aufpressen der Anlaufscheibe (150, 250) auf die Spindelmutter (140, 240) entstanden sind, aufweist.

15. Fahrzeugsitz mit einem Spindelgetriebe (10) nach einem der Ansprüche 1 bis 14, insbesondere zum Antrieb einer Sitzschiene eines Sitzlängsverstellers des Fahrzeugsitzes.

## Claims

1. A spindle gear unit (10) for an adjusting mechanism in a motor vehicle, in particular in a motor vehicle seat, comprising
a) a housing (20, 22),
b) a spindle nut (40, 140, 240) for cooperation with a spindle (30), wherein the spindle nut (40, 140, 240) has an external toothing (44, 144, 244) and the spindle nut (40, 140, 240) has at least one bearing surface (46, 146, 246) for rotatably mounting the spindle nut (40, 140,240) in the housing (20, 22),
c) a thrust washer (50, 150, 250) which is positioned on the bearing surface (46, 146, 246) and encompasses said bearing surface and
d) a worm (70) which is rotatably mounted in the housing (20, 22) and has a worm gear (72) which is in engagement with the external toothing (44, 144, 244) of the spindle nut (40, 140, 240),
**characterized in that**
the thrust washer (50, 150, 250) is pressed onto the spindle nut (40, 140, 240).

2. The spindle gear unit (10) as claimed in claim 1, **characterized in that** the at least one bearing surface (46, 146, 246) has an, in particular, circular cylindrical external contour (46d, 146d, 246d) for the rotatable mounting of the spindle nut (40, 140, 240) in the housing (20, 22), the central axis thereof being aligned with a rotational axis of the spindle nut (40, 140, 240).

3. The spindle gear unit (10) as claimed in claim 1 or 2, **characterized in that** the at least one bearing surface (46, 146, 246) comprises a projection (146a, 246a) for mounting the thrust washer (50, 150, 250) fixedly in terms of rotation, the thrust washer (50, 150, 250) being pressed onto said projection.

4. The spindle gear unit (10) as claimed in claim 3, **characterized in that** the projection (146a, 246a) in the radial direction protrudes at least partially over the external contour (46d, 146d, 246d) for rotatably mounting the spindle nut (40, 140, 240).

5. The spindle gear unit (10) as claimed in claim 4, **characterized in that** the projection (146a, 246a) has a circular cross section and the diameter of the projection is 0.05 mm to 0.2 mm larger than the diameter of the external contour (46d, 146d, 246d) for rotatably mounting the spindle nut (40, 140, 240).

6. The spindle gear unit (10) as claimed in one of claims 1 to 5, **characterized in that** the spindle nut (40, 140, 240) comprises two specific bearing surfaces (46, 146, 246), the external toothing (44, 144, 244) being arranged therebetween.

7. The spindle gear unit (10) as claimed in one of claims 3 to 6, **characterized in that** at least one bearing surface (146, 246) comprises a projection (146a, 246a) in a transition region between the bearing surface (46, 146, 246) and the external toothing (144, 244).

8. The spindle gear unit (10) as claimed in one of claims 1 to 7, **characterized in that** the axial extent of the external toothing (144, 244) is defined in at least one axial direction by a front face (144b, 244b) oriented in the radial direction.

9. The spindle gear unit (10) as claimed in claim 8, **characterized in that** the thrust washer (50, 150, 250) bears against the front face (144b, 244b).

10. The spindle gear unit (10) as claimed in claim 8 or 9, **characterized in that** at least one retaining tip (144a) protrudes in the axial direction over the front face (144b) in the direction of the thrust washer (150).

11. The spindle gear unit (10) as claimed in claim 10, **characterized in that** the at least one retaining tip (144a) is arranged in a radial outer region of the external toothing (144).

12. The spindle gear unit (10) as claimed in claim 10 or 11, **characterized in that** the at least one retaining tip (144a) engages positively in a recess of the thrust washer (150) and the recess of the thrust washer (150) is formed, in particular, by pressing the thrust washer (150) onto the spindle nut (140).

13. The spindle gear unit (10) as claimed in one of claims 1 to 12, **characterized in that** the strength of the material of the spindle nut (140, 240) is greater than the strength of the material of the thrust washer (150, 250).

14. The spindle gear unit (10) as claimed in one of claims 8 to 13, **characterized in that** the spindle nut (140, 240) adjacent to the front face (144b, 244b), in particular between the projection (146a, 246a) and the front face (144b, 244b), has a peripheral groove (146b, 246b) for receiving chips which are produced when the thrust washer (150, 250) is pressed onto the spindle nut (140, 240).

15. A vehicle seat comprising a spindle gear unit (10) as claimed in one of claims 1 to 14, in particular for driving a seat rail of a longitudinal seat adjuster of the vehicle seat.

## Revendications

1. Transmission à broche (10) pour un dispositif de réglage dans un véhicule automobile, en particulier dans un siège de véhicule automobile, comprenant
a) un boîtier (20, 22),
b) un écrou de broche (40, 140, 240) destiné à coopérer avec une broche (30), l'écrou de broche (40, 140, 240) comprenant une denture extérieure (44, 144, 244), et l'écrou de broche (40, 140, 240) comprenant au moins une surface de palier (46, 146, 246) pour le support sur palier rotatif de l'écrou de broche (40, 140, 240) dans le boîtier (20, 22),
c) un disque de butée (50, 150, 250) qui est enfiché sur la surface de palier (46, 146, 246) et qui vient en prise autour de celle-ci et
d) une vis sans fin (70) qui est supportée à rotation dans le boîtier (20, 22) et qui présente une denture hélicoïdale (72) qui est en prise avec la denture extérieure (44, 144, 244) de l'écrou de broche (40, 140, 240), **caractérisée en ce que**
le disque de butée (50, 150, 250) est pressé sur l'écrou de broche (40, 140, 240).

2. Transmission à broche (10) selon la revendication 1, **caractérisée en ce que** l'au moins une surface de palier (46, 146, 246) comprend un contour extérieur (46d, 146d, 246d) notamment cylindrique circulaire pour le support sur palier rotatif de l'écrou de broche (40, 140, 240) dans le boîtier (20, 22), dont l'axe médian est aligné avec un axe de rotation de l'écrou de broche (40, 140, 240).

3. Transmission à broche (10) selon la revendication 1 ou 2, **caractérisée en ce que** l'au moins une surface de palier (46, 146, 246) comprend un épaulement (146a, 246a) pour le support sur palier solidaire en rotation du disque de butée (50, 150, 250) sur lequel épaulement est pressé le disque de butée (50, 150, 250).

4. Transmission à broche (10) selon la revendication 3, **caractérisée en ce que** l'épaulement (146a, 246a) fait saillie dans la direction radiale au moins en partie au-delà du contour extérieur (46d, 146d, 246d) en vue du support sur palier rotatif de l'écrou de broche (40, 140, 240).

5. Transmission à broche (10) selon la revendication 4, **caractérisée en ce que** l'épaulement (146a, 246a) présente une section transversale ronde circulaire et le diamètre de l'épaulement est supérieur de 0,05 mm à 0,2 mm au diamètre du contour extérieur (46d, 146d, 246d) en vue du support sur palier rotatif de l'écrou de broche (40, 140, 240).

6. Transmission à broche (10) selon l'une quelconque des revendications 1 à 5, **caractérisée en ce que** l'écrou de broche (40, 140, 240) comprend exactement deux surfaces de palier (46, 146, 246), entre lesquelles est disposée la denture extérieure (44, 144, 244).

7. Transmission à broche (10) selon l'une quelconque des revendications 3 à 6, **caractérisée en ce qu'**au moins une surface de palier (146, 246) comprend un épaulement (146a, 246a) dans une région de transition entre la surface de palier (46, 146, 246) et la denture extérieure (144, 244).

8. Transmission à broche (10) selon l'une quelconque des revendications 1 à 7, **caractérisée en ce que** l'étendue axiale de la denture extérieure (144, 244) est limitée dans au moins une direction axiale par une surface frontale (144b, 244b) orientée dans la direction radiale.

9. Transmission à broche (10) selon la revendication 8, **caractérisée en ce que** le disque de butée (50, 150, 250) s'applique contre la surface frontale (144b, 244b).

10. Transmission à broche (10) selon la revendication 8 ou 9, **caractérisée en ce qu'**au moins une pointe de retenue (144a) fait saillie dans la direction axiale au-delà de la surface frontale (144b) dans la direction du disque de butée (150).

11. Transmission à broche (10) selon la revendication 10, **caractérisée en ce que** l'au moins une pointe de retenue (144a) est disposée dans une région radialement extérieure de la denture extérieure (144).

12. Transmission à broche (10) selon la revendication 10 ou 11, **caractérisée en ce que** l'au moins une pointe de retenue (144a) vient en prise par engagement par correspondance de formes dans un renfoncement du disque de butée (150) et le renfoncement du disque de butée (150) est formé notamment par pressage du disque de butée (150) sur l'écrou de broche (140).

13. Transmission à broche (10) selon l'une quelconque des revendications 1 à 12, **caractérisée en ce que** la résistance du matériau de l'écrou de broche (140, 240) est supérieure à la résistance du matériau du disque de butée (150, 250).

14. Transmission à broche (10) selon l'une quelconque des revendications 8 à 13, **caractérisée en ce que** l'écrou de broche (140, 240) présente, en position adjacente à la surface frontale (144b, 244b), en particulier entre l'épaulement (146a, 246a) et la surface frontale (144b, 244b), une rainure périphérique (146b, 246b) pour recevoir des copeaux qui sont produits lors du pressage du disque de butée (150, 250) sur l'écrou de broche (140, 240).

15. Siège de véhicule comprenant une transmission à broche (10) selon l'une quelconque des revendications 1 à 14, en particulier pour l'entraînement d'un rail de siège d'un dispositif de réglage longitudinal de siège du siège de véhicule.
